(19) Europäisches Patentamt / European Patent Office / Office européen des brevets

(11) **EP 4 219 921 A1**

(12) **EUROPEAN PATENT APPLICATION**

(43) Date of publication:
**02.08.2023  Bulletin 2023/31**

(21) Application number: **22154135.2**

(22) Date of filing: **31.01.2022**

(51) International Patent Classification (IPC):
*F02D 19/02* $^{(2006.01)}$  *F02D 41/00* $^{(2006.01)}$
*F02B 25/04* $^{(2006.01)}$  *F02D 41/14* $^{(2006.01)}$
*F02M 26/06* $^{(2016.01)}$  *F02M 26/46* $^{(2016.01)}$

(52) Cooperative Patent Classification (CPC):
**F02D 41/005; F02B 25/04; F02B 37/04;
F02D 19/029; F02D 41/0047; F02D 41/0072;
F02D 41/1448; F02M 26/06; F02M 26/46;**
F02D 41/0007; F02D 41/1445; F02D 41/1446;
F02D 2200/0414; F02D 2200/703

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Winterthur Gas & Diesel Ltd.
8401 Winterthur (CH)**

(72) Inventor: **Unfug, Fridolin
8408 Winterthur (CH)**

(74) Representative: **Hepp Wenger Ryffel AG
Friedtalweg 5
9500 Wil (CH)**

(54) **INTERNAL COMBUSTION ENGINE AND METHOD FOR OPERATING AN INTERNAL COMBUSTION ENGINE**

(57)    The present invention relates to an internal combustion engine (10) comprising a system for exhaust gas recirculation and to a method for operating an internal combustion engine. The internal combustion engine (10), namely a large vessel engine or a stationary engine, which is operable at least in a gas mode, comprises at least one cylinder (11) having an inner diameter (12) of at least 200mm. The internal combustion engine (10) comprising a turbocharger (13) comprising a turbine (14) and a compressor (15). The engine comprises a low-pressure exhaust gas recirculation path (16) with an EGR valve (17). The internal combustion engine (10) further comprises a first measuring unit (18) for providing a signal representative for an excess-air-ratio in the low-pressure exhaust gas recirculation path, preferably the first measuring unit has a lambda-sensor arranged downstream the EGR valve (17).

Fig. 1

**Description**

The present invention relates to an internal combustion engine comprising a system for exhaust gas recirculation and to a method for operating an internal combustion engine.

The present invention preferably relates to an internal combustion engine like a large marine or ship engine or a stationary engine whose cylinders have an inner diameter of at least 200 mm. The engine preferably is a two-stroke engine or a two-stroke cross head engine.

The engine can be a diesel or a gas engine, a dual fuel or a multi fuel engine. Burning of gaseous fuel or of liquid and/or gaseous fuels in such engines is possible as well as self-igniting or forced igniting.

The term internal combustion engine hence generally also refers to large engines which can be operated not only in diesel mode, which is characterized by the self-ignition of the fuel, but also in Otto mode, which is characterized by the positive ignition of the fuel, or in mixtures of the two, for example by a spark ignition. Furthermore, the term internal combustion engine includes in particular dual-fuel engines and large engines in which the self-ignition of the fuel is used for the positive ignition of another fuel.

The engine has at least one cylinder having a piston therein. The piston is connected to a crankshaft. The piston reciprocates between a top dead center (TDC) and a bottom dead center (BDC) during operation of the engine. The cylinder typically has at least one air passage opening for intake, the air inlet in particular arranged in the liner of the cylinder, and at least one air passage opening for exhaust, the exhaust outlet in particular arranged in the cover of the cylinder. Preferably, the air inlet is in fluid connection with a scavenging air receiver.

The internal combustion engine can be a longitudinally flushed two-stroke engine.

Engine speed is preferably below 800 RPM (4-stroke) and more preferably below 200 RPM (2-stroke) which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquified Biogas), biological fuels (e. g. Algae fuel or Seaweed Oil), hydrogen, synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines. In case of liquid fuel, like heavy fuel oil, marine diesel oil, diesel or other liquids, as well as in case of gaseous fuels, like LNG, LPG or others, being burned by the engine, the exhaust from this combustion process needs to be cleaned to comply with the existing pollutant regulations such as IMO Tier III rules.

The internal combustion engine may be operated in a gas mode. Fluid fuel such as a gas fuel may be provided or a pressurized gas liquid may be provided as a liquid by gas admission valves and is used for torque-generating. In the gas mode, additionally, a small amount of a liquid fuel, sometimes referred to as pilot injection, may be injected to carry out an induced ignition.

Besides fresh air and fluid fuel an inert gas, such as exhaust gas, may be introduced into the cylinder. The engine may comprise a high-pressure or a low-pressure exhaust gas recirculation path.

Modern 4-stroke Otto-cycle engines use a closed-loop lambda control, measuring the oxygen content in the exhaust gases and control the quantity of fuel injected in the engine, to keep the lambda within a desirable limit and to avoid rich combustion. On 2-stroke engines, the in cylinder lambda measurement can be challenging due to the cylinder scavenging process that allows fresh air to come through the inlet ports while the exhaust valve is open, mixing with the exhaust gases. Thus, measuring the residual combustion oxygen in the exhaust gases is not reliable.

From EP 3 722 572 A1 it is known, that the firing pressure peak angle may be adjusted by adapting the pilot fuel injection timing, by adapting the EGR rate, by adapting the amount of added fuel, by adapting scavenge air pressure and/or by adapting the amount of an inert addition. The EGR rate may have a strong influence on the combustion process.

The EGR system may provide for a decrease of temperature after compression and an inertization of the cylinder charge, which helps to suppress pre-ignition of the charge as well as engine knocking.

It is known, that to reduce or to avoid abnormal combustion processes, inert gas, such as exhaust gas, can be introduced into the cylinder. From EP 3 081 890 A1 it is known to prevent pre-ignition by adjusting the EGR rate, also knocking and misfiring can be reduced or avoided.

In addition, by the application of an exhaust gas recirculation it is possible to reduce the exhaust gas emissions $CH_4$, THC, $NO_x$, CO.

However, the higher the EGR rate, the higher is also the risk that the air-to-fuel ratio (AFR) in the cylinder becomes too small. The air-to-fuel ratio is the mass ratio of to a solid, liquid, or gaseous fuel present in a combustion process.

The EGR rate may be measured in combustion engines using EGR to optimise the combustion process by measuring the $O_2$ concentration before and after the engine, for example in the scavenging receiver and at the exhaust port. An alternative would be to calculate the EGR-rate by measuring the $CO_2$ concentration in the exhaust gas and in the scavenging charge.

WO2011/076837 A1 teaches to measure and to control the EGR rate and to determine the EGR mass flow from the total exhaust mass flow across the cylinder and the turbine mass flow across the turbine.

It is an object of the present invention to avoid the drawbacks of the prior art and in particular to provide an internal combustion engine and a method of operating an internal combustion engine which allow a precise setting of engine parameters.

According to the invention the internal combustion engine is a large vessel engine or a stationary engine, which is operable at least in a gas mode.

The internal combustion engine comprises at least one cylinder having an inner diameter of at least 200mm.

The internal combustion engine may comprise at least one gas admission valve for supplying fluid fuel to the cylinder. Fluid fuel may be a fuel gas or a high pressurized fuel liquid which vaporizes when entering the cylinder.

The internal combustion engine comprises at least one turbocharger with at least one turbine and at least one compressor.

The turbocharger increases the amount of air supplied to the cylinder using the exhaust gas discharged from the cylinder. The air compressed by the turbocharger can be supplied to the scavenging receiver which is in fluid connection to the air passage opening for intake.

The internal combustion engine comprises a low-pressure exhaust gas recirculation path with an EGR valve.

For the low-pressure exhaust gas recirculation the exhaust gas passes the turbine of the turbocharger before it is mixed to the fresh air and/or passes the compressor of the turbocharger and enters the cylinder as part of the scavenging air. Thus, typically the EGR path branches off downstream the turbine.

The internal combustion engine further comprises a first measuring unit for providing a signal representative for an excess-air-ratio in the low-pressure exhaust gas recirculation path.

The first measuring unit may comprise a lambda-sensor arranged downstream the EGR valve. Lambda $\lambda$, also called air-fuel equivalence ratio, is the ratio of actual air-to-fuel ratio to stoichiometry for a given mixture. $\lambda = 1.0$ means that the mixture is at stoichiometry, rich mixtures are given for $\lambda < 1.0$, and lean mixtures for $\lambda > 1.0$.

The air-to-fuel equivalence ratio should always be above the value of one. Typically, an EGR rate of 50% results in a lambda $\lambda$ of 1.5.

The excess-air-ratio may be specified by the air-to-fuel ratio or by the air-to-fuel equivalence ratio $\lambda$.

Typically a lambda-sensor measures the proportion of Oxygen ($O_2$) in the gas being analysed, in this case the recirculated exhaust gas. From the oxygen content the air-fuel equivalence ratio may be determined, if the kind of fuel is known, respectively the stoichiometric air requirement.

A standard broad band lambda probe works in a lambda range up to $\lambda$~1.5-1.7 quite well.

For example an ES63x Lambda module of the company ETAS can be used as a measuring unit with a standard broad band lambda probe for any regular fuel.

Therefore it would be possible to calculate the EGR rate via lambda measurement in the exhaust gas, fuel consumption and turbine mass flow calculation.

Knowledge of the air-fuel equivalence ratio of the exhaust gas allows determination of further values for controlling the combustion.

The internal combustion engine may comprise a second measuring unit with at least one sensor for providing a signal representative of the ambient pressure and preferably with at least one sensor for providing a signal representative of the ambient temperature.

The internal combustion engine may further comprise a third measuring unit with at least one sensor for providing a signal representative of a pressure downstream the turbine, with at least one sensor for providing a signal representative of a pressure upstream the turbine and with at least one sensor for providing a signal representative of a temperature upstream the turbine.

The internal combustion engine may further comprise a first control unit which is configured to receive signals from the first measuring unit, to receive signals form the second measuring unit and to receive signals from the third measuring unit.

Preferably the first control unit is configured to determine the turbine mass flow on the basis of the upstream and downstream pressures, respectively and on the upstream temperature.

As disclosed in WO2011076837 A1 the calculation of the turbine mass flow $m_{turbine}$ can be made applying well known expressions, for example derived from a turbine model determined by using a known expression similar to a throttle equation, as described for example in: Guzzella, Onder: "Introduction to Modeling and Control of Internal Combustion Engine Systems", ISBN3-540-22274-x, Springer-Verlag, Berlin, 2004.

Typically, turbine flow characteristics are given for specific turbochargers, as for example in the user manual of Mitsubishi METurbo TZ-E002-5573, "Guideline for MET turbocharger project", April 2017, pages 54ff. The gas amount in kg/s is given as a function of temperature and pressure before the turbine, ambient temperature and pressure as well as a turbine flow parameter, which is characteristically related to the turbine pressure ratio.

The turbine mass flow $m_{turbine}$ is the part of the exhaust gas, which passes the turbine. Another part of the exhaust gas may pass a wastegate in case it is open. In a gas mode of the engine, the wastegate remains closed.

Alternatively, the turbine mass flow $m_{turbine}$ or "Exh mass flow rate, turbine in" can be calculated from the energy balance of the turbocharger.

$$Exh\ mass\ flow\ rate, turbine\ in = \frac{3600 * alfa - T * \left(p5\ turbine\ in + \frac{p0\ ambient}{1000}\right) * psi1 * AresT * 10}{\sqrt{Rexh * (T5\ turbine\ in + 273.15)}},$$

wherein "alpha-T" and "AresT" can be taken from the turbocharger specification, "p5 turbine in" and "p0 ambient" are measured values and "Rexh" is a given constant or for higher accuracy can be calculated based on a temperature value "T5 turbine in" measured upstream the turbine .

"p5 turbine in" is the pressure upstream turbine, which may be measured between the exhaust receiver and the turbine, preferably close to the turbine. "p0 ambient" is the ambient pressure and can for example be measured anywhere in the engine.

The term "psi1" is given by:

$$psi1 = \sqrt{\frac{2 * k\ exh}{k\ exh - 1} * \left[\left(PI\ turbine_{\underset{sta}{sta}}\right)^{\frac{-2}{k\ exh}} - \left(PI\ turbine_{\underset{sta}{sta}}\right)^{-\frac{k\ exh+1}{k\ exh}}\right]},$$

wherein "k exh" is a constant or for higher accuracy can be calculated based on a measured "T5 turbine in" value and the EGR rate and wherein

$$PI\ turbine_{\underset{sta}{sta}} = \frac{p5\ turbine\ in + \frac{p0\ ambient}{1000}}{\frac{p6\ turbine\ out}{1000} + \frac{p0\ ambient}{1000}},$$

wherein "p6 turbine out" is the pressure downstream the turbine.

The first control unit may be configured to determine the EGR rate on the basis of the signals from the first measuring unit, the second measuring unit and from the signals from the third measuring unit, in particular from the turbine mass flow.

Typically, values of ambient pressure and ambient temperature are available in a given control unit of a ship motor. Thus, alternatively, the first control unit may comprise an input line for receiving signals representative of the ambient pressure and preferably of the ambient temperature from an external device. The first control unit may use these values for determination of the EGR rate.

The exhaust gas recirculation rate or EGR rate $X_{EGR}$ can for example be obtained as the following ratio:

$$X_{EGR} = \frac{m_{turbine} - \lambda_{exhaust} * L_{st} * m_{fuel} - m_{fuel}}{m_{turbine} - m_{fuel}}$$

In these formulas $m_{turbine}$ is the mass flow rate through the turbine, $m_{fuel}$ is the fuel mass flow rate, $\lambda_{exhaust}$ is the air-fuel equivalence ratio in the exhaust, measured by the first measuring unit and $L_{ST}$ is the stoichiometric air requirement or the stoichiometric air fuel ratio.

For determining the mass flow rate through the turbine the ambient pressure needs to be known as for example explained above. The fuel mass flow rate $m_{fuel}$ typically is available in a given control unit of a ship motor. Additionally or alternatively the first control unit is configured to determine the fuel mass flow rate on basis of information about the amount and kind of fuel actually used in the combustion engine.

Typically, combustion may be controlled by setting the EGR rate. However, the combustion control should be capable to adjust the EGR rate in a precise way. To be able to realise a precise combustion control the determination of the actual EGR rate is important.

EP 4 219 921 A1

The first control unit may be configured to compare the determined EGR rate with a predetermined value and/or with a predetermined interval. The predetermined value and/or with a predetermined interval may have been determined in a shop test or may be taken from a map or may be chosen dependent on a pressure curve.

Set points generally are load dependent. They may differ among engine types and depend on the bore size. Set points may also depend on the engine speed and power.

The first control unit may be configured to generate a signal if the EGR rate is below or above the predetermined value and/or the predetermined interval. The internal combustion engine may comprise a monitor for displaying the signal. The monitor may be a visual and/or acoustical monitor.

Thus, a user may realise if the EGR rate reaches an unwanted value and he may stop or modify the control process in this case. Unreasonable settings of the EGR rate can be avoided.

The first control unit may be configured to determine the difference between the determined EGR rate and the predetermined value and/or the predetermined interval.

The first control unit may be configured to react on a determined EGR rate which is below or above the predetermined value and/or the predetermined interval by stopping and/or amending a control process which sets a new EGR rate.

A combustion control may be capable to adjust the EGR rate. To do this in a precise way, the determination of the actual EGR rate is proposed.

The internal combustion engine may comprise a second control unit at least being configured to adjust the flow of exhaust gas in the EGR path. The second control unit may be part of the first control unit. The first and/or the second control unit may be part of an engine control system.

The second control unit may be configured to adjust the flow of exhaust gas in the EGR path on the basis of a signal representative for a combustion parameter, an emission level, an engine performance, ambient conditions, fuel properties, and/or an air-to-fuel ratio in the cylinder.

The second control unit may be configured to take into account the determined EGR rate when adjusting the flow of exhaust gas in the EGR path.

A combustion parameter is a parameter which characterizes the combustion, such as a peak cylinder pressure, a pre-ignition, knocking and/or misfiring event or a beta value $\beta$.

The beta value $\beta$ is a parameter for the pressure increase during combustion.

$$\beta = (p_{max} - p_{comp}) / (\theta_{pmax} - \theta_{PIT}) \ ,$$

wherein $p_{max}$ is the maximum cylinder pressure, $\theta_{pmax}$ the crank angle of the maximum cylinder pressure, $p_{comp}$ is the cylinder pressure which is reached after compression and $\theta_{PIT}$ is the crank angle at which the pilot fuel is injected.

The emission level is a parameter which characterizes the quality of the exhaust gas, such as a $NO_x$ value or a $CH_4$ value in the exhaust gas.

The engine performance is a parameter which characterizes the output of the engine, such as the temperature at the turbine outlet.

Ambient conditions are parameter, which characterize the environment, such as ambient temperature, ambient humidity, and/or ambient pressure.

Fuel properties characterize the used fuel, such as fuel quality, methane number or calorific value.

Taking into account the determined EGR rate can mean, that the second control unit may be configured to compare the EGR rate with a predetermined value and/or the predetermined interval, and/or to use the difference between the EGR rate and a predetermined value and/or the predetermined interval provided by the first control unit for further proceedings.

In case the determined EGR rate is too low or too high or the difference with respect to a predetermined EGR rate value reaches a predetermined level, the second control unit may be configured to stop the adjustment of the EGR rate, to correct the adjustment of the EGR rate, to change a parameter different from the EGR rate and/or to induce maintenance.

The internal combustion engine may comprise a third control unit which is configured to receive a signal from the first measuring unit and to determine the air-to-fuel ratio or the air-fuel equivalence ratio ($\lambda$) in the cylinder on the basis of signals from the first measuring unit and from the second and third measuring unit. Alternatively or additionally the air-to-fuel ratio or the air-fuel equivalence ratio ($\lambda$) in the cylinder on the basis of signals from the first measuring unit and of signals from the first control unit.

The in-cylinder lambda value may be determined by the following formula.

$$\lambda_{cylinder} = (m_L + m_{L,EGR}) / (L_{ST} * m_{fuel})$$

In this formula $m_{fuel}$ is the fuel mass flow rate and $m_L$ is the mass flow rate of air entering the combustion chamber, $L_{ST}$ is the stoichiometric air fuel ratio and $m_{L,EGR}$ is the air equivalent oxygen mass flow rate from the recirculated exhaust gas.

The air equivalent oxygen mass flow rate from the recirculated exhaust gas $m_{L,EGR}$ can be narrowed by the following formula

$$m_{L,EGR} = m_{EGR} * w_{O2} / 0.232,$$

wherein $m_{EGR}$ is the mass flow rate of recirculated exhaust gas and $w_{O2}$ is the mass fraction of oxygen in air.

The mass flow rate of recirculated exhaust gas is connected to the exhaust gas recirculation rate by the following formula:

$$m_{EGR} = m_L / X_{EGR} / (1 - X_{EGR}).$$

The mass fraction of oxygen in air $w_{O2}$ can be narrowed by

$$w_{O2} = v_{O2,exhaust} * 0.232 / 0.2095,$$

wherein $v_{O2,exhaust}$ is the mol fraction of oxygen in the exhaust gas.

The mol fraction $v_{O2}$ can generally be calculated by the following formula:

$$v_{O2} = (\lambda_{exhaust} - 1) / (4.76 \lambda_{exhaust} + (H_B/C_B) / (H_B/C_B + 4)),$$

wherein $H_B$ is the hydrogen content of the fuel and $C_B$ is the carbon content of the fuel. $H_B$ and $C_B$ are fuel-specific quantities. For $CH_4$ the value of $H_B$ would be 4 and the value of $C_B$ would be 1.

$\lambda_{exhaust}$ is measured with a lambda probe in the exhaust gas.

Thus, knowing the used fuel, the mass flow rates and the lambda of the exhaust gas, the EGR rate and the in-cylinder lambda can be calculated.

Both values can be used for precisely monitoring the combustion process and for improving a control of the combustion process.

According to the invention a method for operating an internal combustion engine as described above comprises the step of providing a signal representative for an excess-air-ratio in the low-pressure exhaust gas recirculation path.

This value may be used for monitoring the combustion process and for improving the control of the combustion process.

The method may further comprise the steps of providing a signal representative of ambient pressure and preferably a signal representative of ambient temperature, providing a signal representative of a pressure downstream the turbine, a signal representative of a pressure sensor upstream the turbine and a signal representative of a temperature upstream the turbine.

The method may further comprise the step of determining the EGR rate on the basis of the signal representative for an excess-air-ratio in the low-pressure exhaust gas recirculation path, the signal representative of an ambient pressure, the signal representative of a pressure downstream the turbine, the signal representative of a pressure upstream the turbine and/or the signal representative of a temperature upstream the turbine.

Preferably, the turbine mass flow is determined on the basis of the upstream and downstream pressures, respectively, on the upstream temperature and/or the ambient pressure.

Additionally, the air-to-fuel ratio or the air-fuel equivalence ratio ($\lambda$) in the cylinder may be determined on the basis of the signal representative for an excess-air-ratio in the low-pressure exhaust gas recirculation path.

In the following, the invention is further explained in embodiments by means of figures. Same reference numbers refer to functionally corresponding features.

Figure 1:    shows a schematic view of an internal combustion engine;
Figure 2:    shows a schematic presentation of further example of an internal combustion engine.

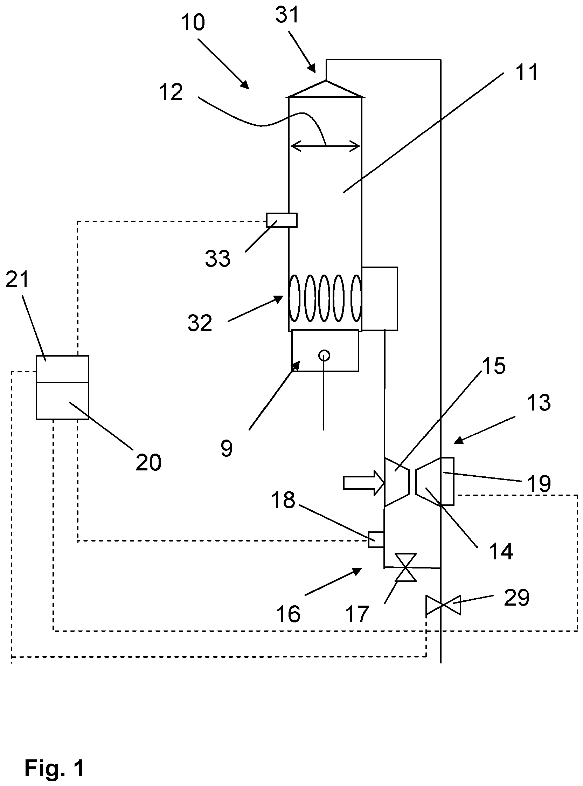

Figure 1 shows a first example of an internal combustion engine 10 comprising a cylinder 11 with a reciprocating piston 9 having an inner diameter 12 of at least 200mm. The internal combustion engine 10 comprises a system for exhaust gas recirculation with an EGR path 16 arranged between an exhaust outlet 31 and an air inlet 32 of the cylinder 11. The internal combustion engine 10 comprises a turbocharger 13 with a turbine 14 and a compressor 15.

The system for exhaust gas recirculation is a low pressure system, wherein the recirculated exhaust gas is guidable to the air inlet 32 of the cylinder 11 via the compressor 15 of the turbocharger 13, where the exhaust gas is mixed with fresh air. In this example the exhaust gas is guidable through a turbine 14 of a turbocharger 13 and the EGR path 16 braches off downstream the turbine 14.

The amount of recirculated exhaust gas can be controlled by setting an EGR valve 17 and by setting a back pressure valve 29.

A first measuring unit 18 is arranged downstream the EGR valve 17. The measuring unit 18 comprises a lambda-sensor and provides a signal representative for an excess-air-ratio in the low-pressure exhaust gas recirculation path to a first control unit 20.

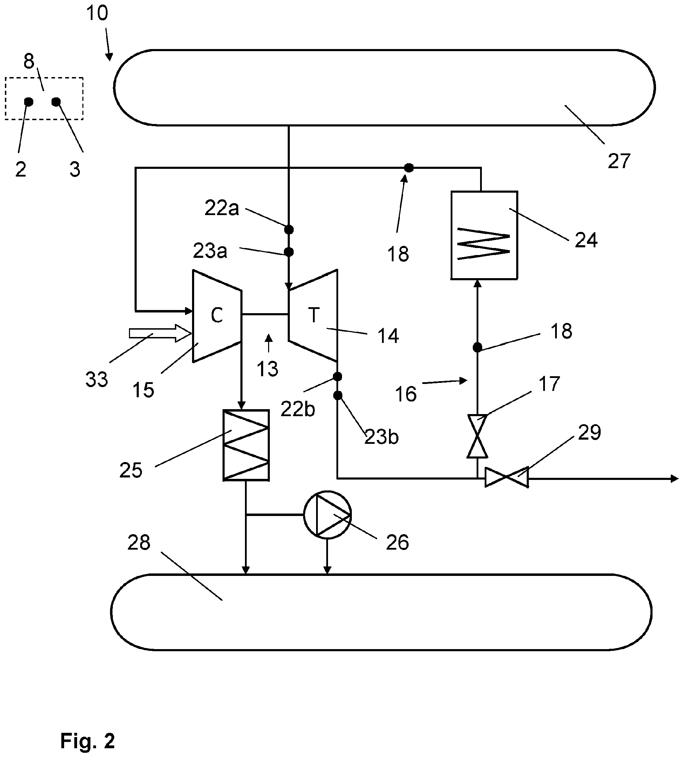

The combustion engine may comprise a second measuring unit 8 (see figure 2) comprising at least one sensor 2 (see figure 2) for providing a signal representative of the ambient pressure and at least one sensor 3 (see figure 2) for providing a signal representative of the ambient temperature.

A third measuring unit 19 is arranged close to the turbine 19.

The first control unit may calculate the EGR Rate on basis of signals from the first measuring unit 18, from the second measuring unit 8 (see figure 2) and/or from the third measuring unit 19.

The internal combustion engine 10 comprises a second control unit 21 being configured to adjust the flow of exhaust gas in the EGR path 16 by setting the back pressure valve 29.

The second control unit 21 adjusts the flow of exhaust gas in the EGR path on basis of a combustion parameter. The combustion parameter may be determined from signals received from a cylinder measuring unit 33, which for example provides pressure measurements within the cylinder 11, in particular the firing peak pressure, pre-ignition, knocking and/or misfiring events or a $\beta$-value.

Figure 2 shows a schematic presentation of further example of an internal combustion engine 10.

Exhaust gas from at least one cylinder 11 (see figure 1) is collected in an exhaust gas receiver 27 and may be recirculated to the scavenge air receiver 28 via a turbine 14 and a compressor 15 of a turbocharger 13.

The low pressure EGR path 16 branches of downstream the turbine 14. The EGR path comprises an EGR valve 17. Downstream the junction to the EGR path there is a back pressure valve 29, which may be used to control the amount of recirculated exhaust gas.

Additionally, the EGR path may comprise a blower not shown in the figures.

A first measuring unit 18 is arranged downstream the EGR valve 17. This example shows two typical positions of the first measuring unit 18, upstream and downstream of an EGR cooler 24.

The combustion engine may comprise a second measuring unit 8 with at least one sensor 2 for providing a signal representative of the ambient pressure and with at least one sensor 3 for providing a signal representative of the ambient temperature.

The third measuring unit 19 (see figure 1) comprises a sensor 22b for providing a signal representative of a pressure downstream the turbine 14, with a sensor 22a for providing a signal representative of a pressure upstream the turbine 14, a sensor 23a for providing a signal representative of a temperature upstream the turbine 14 and a sensor 23b for providing a signal representative of a temperature downstream the turbine 14.

The temperature downstream the turbine corresponds to the temperature of the exhaust gas upstream the EGR cooler 24. The temperature can be used to calculate the isentropic exponent $\kappa$ of the exhaust gas.

The exhaust gas is mixed with fresh air 33 and is guided via a scavenge air cooler 25 and eventually via a blower 26 to the scavenge air receiver 28.

**Claims**

1. Internal combustion engine (10), namely a large vessel engine or a stationary engine, which is operable at least in a gas mode,

   the internal combustion engine (10) comprising at least one cylinder (11) having an inner diameter (12) of at least 200mm,

the internal combustion engine (10) comprising a turbocharger (13) comprising a turbine (14) and a compressor (15) ;

the internal combustion engine comprising a low-pressure exhaust gas recirculation path (16) with an EGR valve (17), **characterized in that**

the internal combustion engine further comprises a first measuring unit (18) for providing a signal representative for an excess-air-ratio in the low-pressure exhaust gas recirculation path, preferably the first measuring unit has a lambda-sensor arranged downstream the EGR valve (17).

2.  Internal combustion engine (10) according to claim 1, wherein

the internal combustion engine (10) comprises a second measuring unit (8) with at least one sensor (2) for providing a signal representative of the ambient pressure and preferably with at least one sensor (3) for providing a signal representative of the ambient temperature;

the internal combustion engine (10) comprises a third measuring unit (19) with at least one sensor (22b) for providing a signal representative of a pressure downstream the turbine (14), with at least one sensor (22a) for providing a signal representative of a pressure upstream the turbine (14) and/or with at least one sensor (23a) for providing a signal representative of a temperature upstream the turbine (14) ;

and wherein the internal combustion engine (10) comprises a first control unit (20) which is configured

- to receive signals from the first measuring unit (18),
- to receive signals form the second measuring unit (8),
- to receive signals from the third measuring unit (19), and preferably to determine the turbine mass flow on the basis of the upstream and downstream pressures, respectively and on the upstream temperature,
- and to determine the EGR Rate on the basis of the signals from the first measuring unit (18), the second measuring unit (18) and from the signals from the third measuring unit (19), in particular from the turbine mass flow.

3.  Internal combustion engine (10) according to claim 2, wherein the first control unit (20) is configured to compare the determined EGR rate with a predetermined value and/or with a predetermined interval.

4.  Internal combustion engine (10) according to claim 3, wherein the first control unit (20) is configured to generate a signal if the EGR rate is below or above the predetermined value and/or the predetermined interval.

5.  Internal combustion engine (10) according to claim 4, wherein the internal combustion engine comprises a monitor for displaying the signal.

6.  Internal combustion engine (10) according to one of claims 2-5, wherein

the internal combustion engine comprises a second control unit (21) at least being configured to adjust the flow of exhaust gas in the EGR path on the basis of a signal representative for

- a combustion parameter, such as a firing peak pressure, pre-ignition, knocking and/or misfiring events or a $\beta$-value,
- an emission level, such as a $NO_x$ value or a $CH_4$ value in the exhaust gas,
- an engine performance, such as the temperature at the turbine outlet,
- ambient conditions, such as temperature, humidity, and/or pressure;
- fuel properties, such as fuel quality, methane number or calorific value
and/or
- an air-to-fuel ratio or an air-fuel equivalence ratio ($\lambda$) in the cylinder,

wherein the second control unit is configured to take into account the determined EGR rate when adjusting the flow of exhaust gas in the EGR path.

7.  Internal combustion engine (10) according to one of the preceding claims 2-6,
wherein the internal combustion engine (10) comprises a third control unit (16) which is configured

- to receive a signal from the first measuring unit (18),

- to determine the air-to-fuel ratio or the air-fuel equivalence ratio (λ) in the cylinder (11) on the basis of the signal from the first measuring unit (18).

8. Method for operating an internal combustion engine (10) according to one of claims 1-7, the method comprising the steps of

- providing a signal representative for an excess-air-ratio in the low-pressure exhaust gas recirculation path.

9. Method according to claim 8 further comprising the steps of

- providing a signal representative of ambient pressure and a signal representative of ambient temperature;
- providing a signal representative of a pressure downstream the turbine (14), a signal representative of a pressure sensor upstream the turbine (14) and a signal representative of a temperature upstream the turbine (14);
- determining the EGR Rate on the basis of the signals signal representative for an excess-air-ratio in the low-pressure exhaust gas recirculation path (16), the signal representative of a pressure downstream the turbine(14), the signal representative of a pressure upstream the turbine (14) and the signal representative of a temperature upstream the turbine (14),
preferably determining the turbine mass flow on the basis of the upstream and downstream pressures, respectively and on the upstream temperature.

10. Method according to claim 8 or 9 further comprising the steps of determining the air-to-fuel ratio or the air-fuel equivalence ratio (λ) in the cylinder (10) on the basis of the signal representative for an excess-air-ratio in the low-pressure exhaust gas recirculation path (16).

**Fig. 1**

**Fig. 2**

Europäisches
Patentamt
European
Patent Office
Office européen
des brevets

## EUROPEAN SEARCH REPORT

Application Number

EP 22 15 4135

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2017 110668 A1 (FEV EUROPE GMBH [DE]) 6 July 2017 (2017-07-06) | 1-10 | INV.<br>F02D19/02 |
| Y | * abstract *<br>* paragraph [0004] – paragraph [0009] *<br>* figure * | 2-7,9,10 | F02D41/00<br>F02B25/04<br>F02D41/14<br>F02M26/06 |
| Y | KELLER MARTIN ET AL: "Experimental Validation of Model Predictive Charging Pressure and EGR Rate Control for an SI Engine",<br>2020 IEEE CONFERENCE ON CONTROL TECHNOLOGY AND APPLICATIONS (CCTA), IEEE,<br>24 August 2020 (2020-08-24), pages 415-422, XP033832101,<br>DOI: 10.1109/CCTA41146.2020.9206287<br>[retrieved on 2020-09-25]<br>* abstract *<br>* sections I, II and III *<br>* figure 1 * | 2-7,9,10 | F02M26/46 |
| A | WO 2018/093389 A1 (CUMMINS INC [IN]) 24 May 2018 (2018-05-24)<br>* abstract *<br>* figure 1A *<br>* paragraph [0027] * | 1-10 | TECHNICAL FIELDS SEARCHED (IPC)<br><br>F02D<br>F02B<br>F02M |

The present search report has been drawn up for all claims

| Place of search | Date of completion of the search | Examiner |
|---|---|---|
| The Hague | 13 July 2022 | Kämper, Fabian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 4135

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2022

| Patent document cited in search report | Publication date | Patent family member(s) | | Publication date |
|---|---|---|---|---|
| DE 102017110668 A1 | 06-07-2017 | NONE | | |
| WO 2018093389 A1 | 24-05-2018 | CN | 109983212 A | 05-07-2019 |
| | | EP | 3542041 A1 | 25-09-2019 |
| | | US | 2019242309 A1 | 08-08-2019 |
| | | WO | 2018093389 A1 | 24-05-2018 |

EPO FORM P0459

For more details about this annex : see Official Journal of the European Patent Office, No. 12/82

**EP 4 219 921 A1**

**Patent documents cited in the description**

- EP 3722572 A1
- EP 3081890 A1

- WO 2011076837 A1

**Non-patent literature cited in the description**

- **GUZZELLA ; ONDER.** Introduction to Modeling and Control of Internal Combustion Engine Systems. Springer-Verlag, 2004

- *Guideline for MET turbocharger project,* April 2017, 54